# EUROPÄISCHE PATENTANMELDUNG

(11) **EP 4 671 701 A1**
(43) Veröffentlichungstag der Anmeldung: **31.12.2025**
(21) Anmeldenummer: 25177619.1
(22) Anmeldetag: 20.05.2025
(51) Int. Cl.: G01F 1/663, G01F 1/66, B60B 39/02, B60B 39/04, B61C 15/10

(54) **VORRICHTUNG ZUR ÜBERWACHUNG DES FLUSSES VON STREUGUT IN EINEM STREUGUTKANAL**

(30) Priorität: 25.06.2024 DE 202024103423 U
(71) Anmelder: Hanning & Kahl GmbH & Co. KG, 33813 Oerlinghausen (DE)
(72) Erfinder: VOIGT, MARCEL, 33758 Schloß Holte-Stukenbrock (DE)
(74) Vertreter: Ter Meer Steinmeister & Partner

(57) **Zusammenfassung**

Vorrichtung zur Überwachung des Flusses von Streugut (12) in einem Streugutkanal (16) mittels eines an dem Streugutkanal angeordneten Schallsensors, dadurch gekennzeichnet, dass der Schallsensor ein Ultraschallsensor (24) ist.

## Beschreibung

Die Erfindung betrifft eine Vorrichtung zur Überwachung des Flusses von Streugut in einem Streugutkanal mittels eines an dem Streugutkanal angeordneten Schallsensors.

Insbesondere befasst sich die Erfindung mit einer Vorrichtung zur Überwachung des Flusses von Streusand in einer Sandungseinrichtung, die in Schienenfahrzeugen zur Erhöhung des Reibwertes zwischen Rad und Schiene eingesetzt wird. Solche Sandungseinrichtungen weisen üblicherweise einen trichterartigen Vorratsbehälter für das Streugut auf, an dessen tiefster Stelle eine Dosiereinheit angeordnet ist, die das Streugut (Sand) dosiert in den Streugutkanal zuführt, in dem der Sand mittels Druckluft zu einer Düse transportiert wird, die auf den Aufstandspunkt des Rades des Schienenfahrzeugs auf der Schiene gerichtet ist. Im Fall einer Störung, beispielsweise einer Fehlfunktion oder Verstopfung der Dosiereinheit oder bei einer sogenannten Brückenbildung des Sandes im Vorratsbehälter kommt der Fluss des Streugutes zum Erliegen, obgleich diese Sandungseinrichtung eingeschaltet ist. Es sind Sensoren bekannt, mit denen der Fluss des Streugutes in der Streugutleitung überwacht werden kann. Optische oder mechanische Sensoren haben jedoch den Nachteil, dass die Sensorköpfe, die unmittelbar dem Fluss des Streugutes ausgesetzt sind, schnell verschmutzen und deshalb häufig gereinigt werden müssen.

Aus DE 20 2014 104 155 U1 ist eine Überwachungsvorrichtung bekannt, bei der mit Hilfe eines Schallsensors das Fließgeräusch des Sandes erfasst wird. Bei einem solchen Sensor ist es jedoch schwierig, das Fließgeräusch des Sandes zuverlässig von anderen Umgebungsgeräuschen zu trennen.

Aufgabe der Erfindung ist es, eine wartungsarme Überwachungsvorrichtung zu schaffen, die eine genaue und zuverlässige Überwachung des Flusses des Streugutes ermöglicht.

Diese Aufgabe wird erfindungsgemäß dadurch gelöst, dass der Schallsensor ein Ultraschallsensor ist.

Ultraschallsensoren dienen zur zuverlässigen Positionserfassung und präzisen kontinuierlichen Abstandsmessung fester, pulverförmiger und flüssiger Medien. Sie senden und empfangen Schallwellen im Ultraschallbereich. Das zu erfassende Objekt reflektiert die Schallwellen und per Laufzeitmessung kann die Distanz ermittelt werden. Die berührungslose Erfassung erfolgt unabhängig von Farbe, Transparenz, Oberflächenbeschaffenheit oder Glanzgrad des Objektes. Auch in Umgebungsbedingungen mit starker Verschmutzung, Staub oder Nebel erfassen die Geräte Objekte zuverlässig und störungsfrei. Die Sensoren bieten in einer kompakten Bauform einen besonders kleinen Blindbereich, große Tastweiten und eine hohe Auflösung.

Da in der Umgebung eines Schienenfahrzeugs der Ultraschallpegel im allgemeinen niedrig ist, wird die Trennung des Ultraschallsignals von Fremdgeräuschen erleichtert. Erforderlichenfalls kann zu diesem Zweck das gesendete Ultraschallsignal in charakteristischer Weise moduliert werden.

Weitere Vorteile bestehen darin, dass (bei entsprechend kurzer Wellenlänge des Ultraschallsignals) auch sehr kleine und/oder transparente Streugutpartikel sicher detektiert werden können und dass mit Hilfe des Ultraschallsensors auch eine quantitative Erfassung des Durchsatzes an Streugut möglich ist, da das Ultraschall-Echo von der Dichte des Streuguts im Streugutkanal abhängig ist. Der Durchsatz ist proportional zu dieser Dichte und zu der Strömungsgeschwindigkeit im Streugutkanal, die ihrerseits anhand der Förderleistung der Druckluftquelle bestimmt werden kann.

Vorteilhafte Ausgestaltungen der Erfindung sind in den Unteransprüchen angegeben. Der Ultraschallsensor kann in die Wand des Strömungskanals integriert sein, kann jedoch wahlweise auch außerhalb des Strömungskanals angeordnet sein, da das Ultraschallsignal die Wand des Streugutkanals problemlos durchdringt und hauptsächlich an den Streugutpartikeln reflektiert wird. Zwar treten auch Reflexionen an der Wand des Streugutkanals auf, jedoch stellen diese ein im wesentlichen konstantes Untergrundsignal dar, das sich einfach von dem durch den Sand verursachten Signal trennen lässt. Gegebenenfalls lassen sich die Wellenlänge des Ultraschallsignals und die Dicke und das Material der Wand des Streugutkanals auch so aufeinander abstimmen, dass es zu destruktiver Interferenz zwischen den an der Außenfläche der Wand und der Innenfläche der Wand reflektierten Signalen kommt.

In einer Ausführungsform kann der Ultraschallsensor auch als Doppler-Ultraschallsensor ausgebildet sein, der nicht nur die Stärke des reflektierten Ultraschallsignals misst, sondern aufgrund des Dopplereffekts auch eine direkte Messung der Strömungsgeschwindigkeit ermöglicht.

Im folgenden werden Ausführungsbeispiele anhand der Zeichnung näher erläutert. Es zeigen:
- Fig. 1: eine Prinzipskizze einer Sandungseinrichtung mit einer erfindungsgemäßen Überwachungsvorrichtung;
- Fig. 2 - 4: Schnittdarstellungen für unterschiedliche Anordnungen eines Ultraschallsensors an einem Streugutkanal; und
- Fig. 5: eine Prinzipskizze einer Sandungseinrichtung mit einem Doppler-Ultraschallsensor.

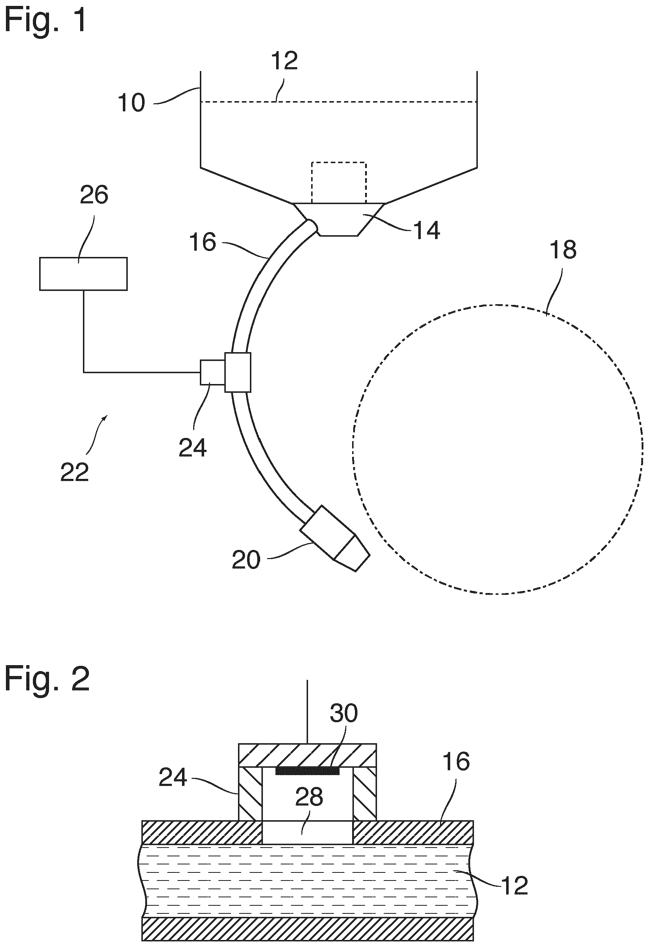

In Fig. 1 ist schematisch der untere Teil eines Vorratsbehälters 10 für Streugut 12 (Sand) dargestellt. An der tiefsten Stelle des Streugutbehälters ist eine Dosiereinrichtung 14 angeordnet, durch die der Sand mittels Druckluft mit einem einstellbaren Durchsatz in einen Streugutkanal 16 eingeleitet wird, der beispielsweise durch ein Rohr oder einen Schlauch gebildet wird. Der Vorratsbehälter 10 ist in einem nicht gezeigten Schienenfahrzeug angeordnet, von dem in Fig. 1 lediglich ein Rad 18 dargestellt ist.

Der Streugutkanal 16 mündet in eine Düse 20, die auf den Aufstandspunkt des Rades 18 auf der Schiene gerichtet ist. Im Fall einer Notbremsung des Schienenfahrzeugs wird die Sandungseinrichtung aktiviert, so dass durch den auf den Aufstandspunkt des Rades abgegebenen Sand der Reibwert erhöht wird.

Damit sichergestellt werden kann, dass durch die Düse 20 auch tatsächlich Streugut abgegeben wird, ist an dem Streugutkanal 16 eine Überwachungsvorrichtung 22 angeordnet, die einen in den Streugutkanal 16 integrierten Ultraschallsensor 24 und ein zugehöriges Steuergerät 26 aufweist. Wahlweise kann der Ultraschallsensor auch direkt an der Dosiereinrichtung oder an der Düse angeordnet sein.

Wenn die Sandungseinrichtung aktiv ist, wird durch den Ultraschallsensor 24 ein Ultraschallsignal in das Lumen des Streugutkanals 16 eingestrahlt und, sofern wirklich Sand durch den Streugutkanal fließt, durch den Sand reflektiert und wieder vom Ultraschallsensor 24 empfangen. Die Stärke des empfangenen Ultraschallechos ist etwa proportional zur Dichte des durch den Streugutkanal 16 strömenden Sandes und ermöglicht somit eine quantitative Erfassung der abgegebenen Sandmenge. Dabei kann ein deutliches Echo auch dann erhalten werden, wenn die Streugutpartikel sehr klein und/oder transparent sind und deshalb mit einem optischen Sensor nur schwer zu detektieren wären.

Das Steuergerät 26 stellt das Ultraschallsignal bereit, das gegebenenfalls getaktet oder in anderer Weise moduliert sein kann, so dass sich das empfangene Echo sicher von anderen Signalquellen trennen lässt. Weiterhin enthält das Steuergerät 26 eine Auswerteelektronik zur Messung und gegebenenfalls Aufzeichnung der Stärke des empfangenen Ultraschallechos. Wenn die Stärke des Echos unterhalb eines bestimmten Schwellenwertes liegt, wird ein Warnsignal an den Fahrzeugführer ausgegeben. Wahlweise können auch automatisch Gegenmaßnahmen wie beispielsweise ein mechanisches Rütteln des Vorratsbehälters 10 und/oder der Dosiereinrichtung 14 ausgelöst werden.

Fig. 2 zeigt einen Schnitt durch den Streumittelkanal 16 und den Ultraschallsensor 24, der in diesem Beispiel eine in der Wand des Streumittelkanals 16 gebildete Öffnung 28 abdeckt, so dass das von einem Sensorkopf 30 des Ultraschallsensors gesendete Signal unmittelbar in das durch den Streumittelkanal strömende Streugut 12 eingestrahlt und nach Reflexion wieder von dem Sensorkopf 30 empfangen wird.

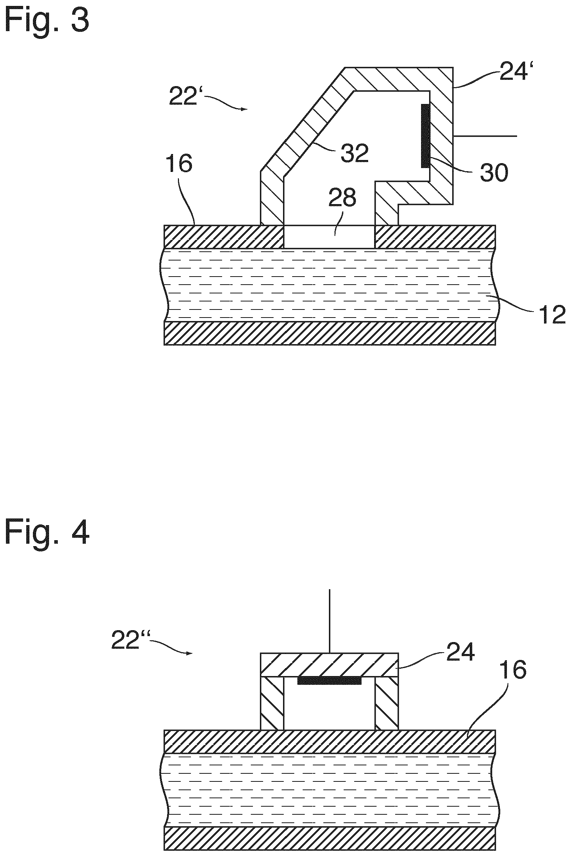

Fig. 3 zeigt in einer Schnittdarstellung analog zu Fig. 2 eine Überwachungsvorrichtung 22' mit einem Ultraschallsensor 24' gemäß einer anderen Ausführungsform. In diesem Beispiel ist das Gehäuse des Ultraschallsensors 24' so geformt, dass das Ultraschallsignal auf dem Weg vom Sensorkopf 30 zu der Öffnung 28 und zurück jeweils an einer Wand 32 des Gehäuses reflektiert wird. Auf diese Weise ist der Sensorkopf 30 besser gegen den (abrasiven) Angriff des Streugute 12 geschützt.

Fig. 4 zeigt eine Überwachungsvorrichtung 22" gemäß einem weiteren Ausführungsbeispiel, das sich von dem Ausführungsbeispiel nach Fig. 1 nur dadurch unterscheidet, dass die Wand des Streumittelkanals 16 keine Öffnung aufweist, so dass das Ultraschallsignal die Wand des Streumittelkanals 16 durchstrahlt.

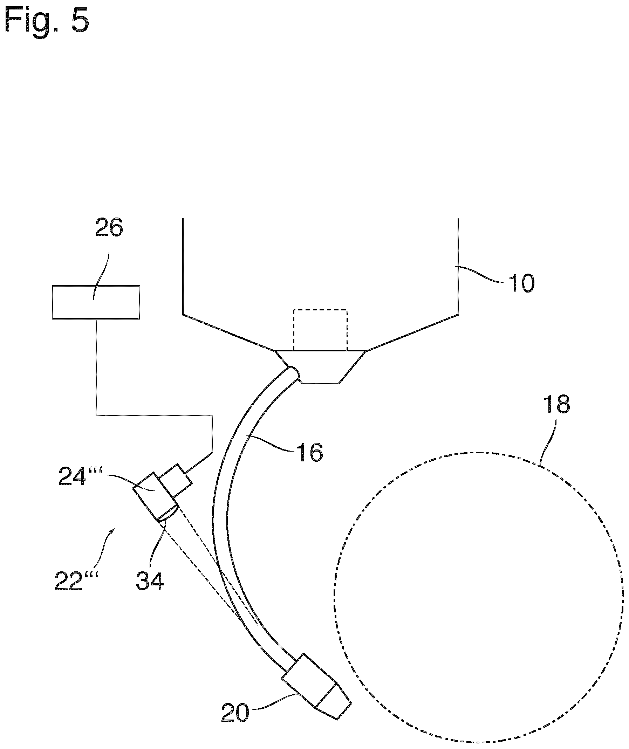

In Fig. 5 ist in einer Darstellung analog zu Fig. 1 eine Überwachungsvorrichtung 22‴ gezeigt, die einen als Doppler-Ultraschallsensor ausgebildeten Ultraschallsensor 24'" aufweist. Dieser Ultraschallsensor ist so in Bezug auf den gekrümmten Streugutkanal 16 angeordnet, dass das Ultraschallsignal tangential in den Streugutkanal 16 eingestrahlt und durch eine Optik 34 auf den Innenquerschnitt des Streugutkanal fokussiert wird. Aufgrund des Doppler-Effekts ist bei dieser Ausführungsform die Frequenz des empfangenen Ultraschallechos von der Fließgeschwindigkeit des Streumittels abhängig, so dass anhand der von der Dichte des Streugutes abhängigen Amplitude und der von der Fließgeschwindigkeit abhängigen Frequenz des Ultraschallechos unmittelbar die pro Zeiteinheit abgegebene Streumittelmenge bestimmt werden kann.

## Patentansprüche

1. Vorrichtung zur Überwachung des Flusses von Streugut (12) in einem Streugutkanal (16) mittels eines an dem Streugutkanal angeordneten Schallsensors, **dadurch gekennzeichnet, dass** der Schallsensor ein Ultraschallsensor (24; 24'; 24‴) ist.

2. Vorrichtung nach Anspruch 1, bei der der Ultraschallsensor (24) so an einer Wand des Streugutkanals (16) angeordnet ist, dass das Ultraschallsignal eine Öffnung (28) in der Wand des Streugutkanals (16) durchstrahlt.

3. Vorrichtung nach Anspruch 1 oder 2, bei der ein Gehäuses des Ultraschallsensors (24') eine Wand (32) aufweist, die das von einem Sensorkopf (30) emittierte Ultraschallsignal reflektiert und auf den Streugutkanal (16) lenkt.

4. Vorrichtung nach Anspruch 1, bei der der Ultraschallsensor (24) so an dem Strömungskanal (16) angeordnet ist, dass das Ultraschallsignal eine Wand des Streugutkanals (16) durchstrahlt.

5. Vorrichtung nach Anspruch 1, bei der der Ultraschallsensor (24‴) ein Doppler-Ultraschallsensor ist.
